# EUROPÄISCHE PATENTSCHRIFT

(11) **EP 0 800 799 B1**
(45) Veröffentlichungstag und Bekanntmachung des Hinweises auf die Patenterteilung: **09.10.2002**
(21) Anmeldenummer: 97810158.2
(22) Anmeldetag: 18.03.1997
(51) Int. Cl.: A61C 17/00

(54) **Napf als Pastenträger für die Dentalhygiene**
Paste holding prophy cup for dental care
Cupule portant de la pâte pour l'hygiène dentaire

(30) Priorität: 11.04.1996 CH 91496
(43) Veröffentlichungstag der Anmeldung: 15.10.1997
(73) Patentinhaber: Hawe Neos Dental AG, 6934 Bioggio (CH)
(72) Erfinder: Baffelli, Gianni, 6950 Tesserete (CH); von Weissenfluh, Beat A., 6925 Gentilino (CH)
(74) Vertreter: AMMANN PATENTANWAELTE AG BERN

(56) Entgegenhaltungen:
- EP-A- 0 372 960
- FR-A- 2 090 970
- US-A- 3 727 315
- US-A- 5 360 339

## Beschreibung

Die vorliegende Erfindung bezieht sich auf einen Napf als Pastenträger für die Dentalhygiene, der aus einem gummielastischen Material besteht und von einem Handstück antreibbar ist und ein Pasten-Aufnahmeteil aufweist, wobei die zur offenen Kante hin sich erweiternde Innenseite des Aufnahmeteils und die zur offenen Kante hin sich erweiternde Aussenseite eine Struktur aufweisen.

Ein solcher Napf, im englischen Sprachgebrauch als "dental prophy-cup" bezeichnet, ist aus der US-A-5,380,202 bekannt, wobei sowohl die aussen angeordneten longitudinalen Rippen als auch die innen angeordneten longitudinalen Rippen ausschliesslich der besseren Zahnreinigung dienen.

In der modernen Zahnheilkunde werden die Zähne der Patienten von daran haftenden Belägen befreit und zwar sowohl aus Gründen der Ästhetik als auch der Zahn-Prophilaxe. Dies geschieht mit Pastenträgern, sogenannten Prophy-Cups, die mit abrasiver Paste, sogenannter Prophy-Paste, beschickt werden. Diese Prophy-Cups werden in Drehung versetzt und zwar im allgemeinen in Rechtsdrehung, mit den Zähnen in Kontakt gebracht und unter wechselndem Druck entfaltet das Pasten-Napf-System seine reinigende Wirkung. Statt einem Napf kann auch eine Bürste verwendet werden oder ein Pulverstrahlgerät, doch haben sich diese Gerätschaften nicht durchgesetzt.

Es sind eine Vielzahl von Näpfen im Handel erhältlich, die auch eine Struktur der Aussen- oder Innenwand aufweisen. In der Regel bestehen diese Näpfe aus Silikongummi, wie z.B. in der FR-A-2 090 970 offenbart.

Ferner ist aus der US-A-3 727 315 ein Napf bekannt, der auf seiner Aussenseite spiralförmig angeordnete Rinnen aufweist. Diese Rinnen dienen zusammen mit einem Abstreiffinger dazu, die an der Aussenseite des Napfes anhaftende Paste sowie eventuellen Speichel in Richtung freie Kante des Napfes zu bewegen.

Ausserdem ist aus der EP-A-372 960 ein Napf bekannt, der auf seiner Innenseite eine Anzahl spiralig. schräg angeordneter Rippen aufweist, die als Führungselemente dienen, um die Paste in das Innere des Napfes zu drücken.

Der Napf gemäss US-A-5,360,339 weist auf der Innenseite eine Struktur auf, um eine bessere Pastenzufuhr und -Verteilung zu erzielen. Zu diesem Zwecke weist er längs und quer angeordnete Kanäle auf, wobei die Kanten bei diesen Kanälen abgeschrägt sind. Obwohl eine Verbesserung gegenüber anderen Näpfen möglich ist, die überhaupt keine Struktur aufweisen, ist die gleichmässige Verteilung der Paste immer noch unbefriedigend und das Problem der starken Erwärmung des Zahnes wird hiermit nicht behoben.

Die vorbekannten Näpfe weisen erhebliche Nachteile auf: Proportional zu Dauer und Druck der Aktion auf den Zahn erwärmt sich dieser infolge der Reibung. Diese Erwärmung wird vom Behandelten als unangenehm bis schmerzhaft empfunden. Die rotierende Aktion hat die Tendenz, den natürlicherweise fadenziehenden Speichel zu sammeln und mitzuschleppen. Im Verbund mit der Paste entsteht so ein wachsender Schleimballen auf der Aussenseite des Napfes.

Bei Ueberschreiten einer kritischen Grösse beginnt dieser Schleimballen nach allen Seiten zu spritzen, das sogenannte "Splattering" tritt auf. Dieses Splattering stellt durch die bakterielle Kontamination grosse hygienische Probleme und kann Behandler, Behandelte und die Umgebung verschmutzen. Deshalb ist die Anwendung der bisher bekannten Näpfe dauernden Unterbrechungen unterworfen, die dazu dienen, den Schleimballen zu entfernen und so das Splattering zu reduzieren. Dadurch werden aber auch grosse Anteile der Paste unbenutzt und zweckentfremdet im Schleimballen gesammelt und dem Abfall zugeführt. Diese Schleimballenbildung und anschliessendes Spritzen gelten allgemein als wichtigste Unzulänglichkeiten der vorbekannten Näpfe bei ihrer Anwendung.

Die Form der üblichen Näpfe enthält auf der Innenseite eine Vertiefung, mit der eine Quantität der Paste aufgenommen und der Anwendung zugeführt wird. Bei den meisten bekannten Näpfen läuft dies so ab, dass unmittelbar mit Beginn der Rotation ein grosser Klumpen Paste in Aktion tritt, bis nur noch der tote Winkel der Vertiefung mit Paste gefüllt ist und auch bleibt. So kommt es, dass diese Näpfe das Reinigen von einem oder höchstens zwei Zähnen zulassen, bis der Vorrat an Paste erschöpft ist und eine Unterbrechung zur Neubeschickung notwendig ist. Dies stellt eine weitere unrationelle und unwillkommene Diskontinuität der Napfanwendung dar.

Es ist von diesem Stand der Technik ausgehend Aufgabe der vorliegenden Erfindung, einen Napf als Pastenträger anzugeben, der einerseits eine Erwärmung des Zahnes auch bei längerer Behandlung wirksam verhindert und andererseits eine kontinuierliche Pastenzuführung gewährleistet und die Bildung von Schleimballen und deren anschliessendes Zerplatzen verhindert. Ein solcher Napf ist im unabhängigen Patentanspruch 1 definiert. Weitere Merkmale und vorteilhafte Ausbildungen sind in den abhängigen Ansprüchen beschrieben.

Die Erfindung wird im folgenden anhand einer Zeichnung eines Ausführungsbeispiels näher erläutert.

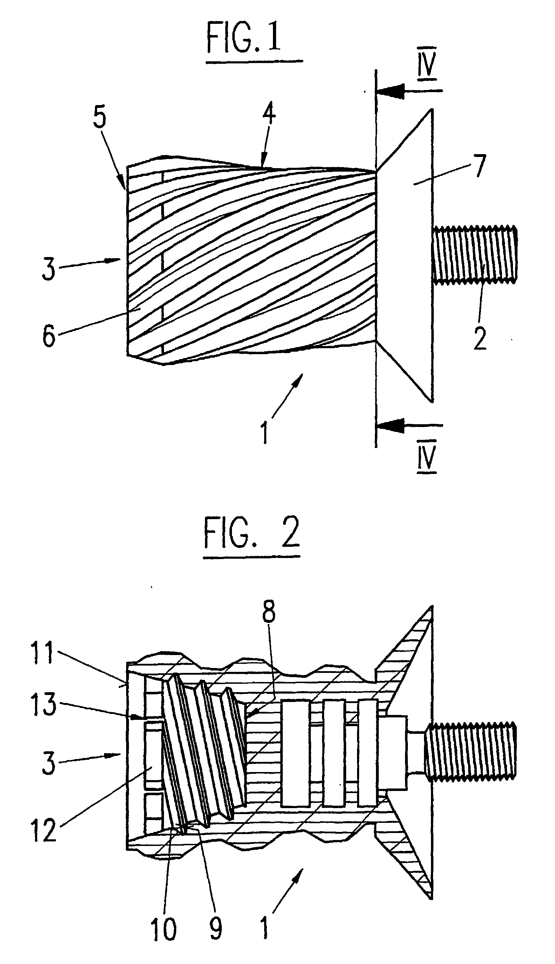

- Figur 1: zeigt eine Seitenansicht des erfindungsgemässen Napfes,
- Figur 2: zeigt einen Längsschnitt des Napfes von Figur 1,

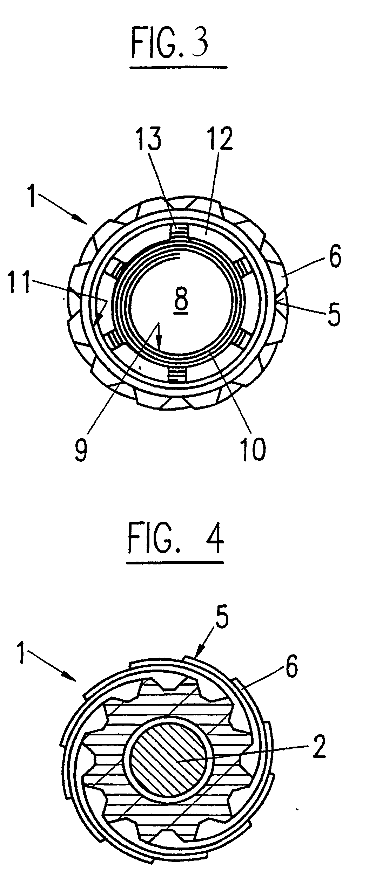

- Figur 3: zeigt eine Sicht von vorne, in Figur 1 von links, auf den Napf gemäss Figur 1 und
- Figur 4: zeigt einen Schnitt gemäss der Linie IV-IV in Figur 1.

Der Napf 1 besteht im wesentlichen aus einem Befestigungsteil mit Gewindestutzen 2 und einem Pasten-Aufnahmeteil 3. Mit dem Gewindestutzen 2 wird der Napf an ein Handstück befestigt und durch diesen im allgemeinen rechtsdrehend angetrieben. Der Gewindestutzen 2 ist aus Metall gefertigt. Die übrigen Teile des Napfes sind aus einem gummielastischen Material gefertigt. Viele solcher gummielastischer Materialien sind bekannt, beispielsweise Naturkautschuk oder künstlicher Gummi, wobei je nach gewünschter elastischer Eigenschaft und Beschaffenheit der Oberfläche verschiedene Kunststoffe in Frage kommen. Da die Erwärmung eine Folge der Gleitreibung des Napfes auf dem Zahn ist, ist es vorteilhaft, Materialien mit reduzierter Gleitreibung zu verwenden. Dies sind beispielsweise halogenierte Polymere, wobei eines unter dem Handelsnamen Teflon bekannt ist, oder thermoplastische Elastomere. Wichtig ist dabei, dass der Reibungskoeffizient gegenüber den zu behandelnden Zähnen relativ gering ist.

Der Napf muss nicht notwendigerweise einen Gewindestutzen aufweisen und kann bekanntermassen auch ausgebildet sein, an den Antrieb des Gerätes anschnappbar oder sonstwie verriegelbar zu sein.

Die Aussenseite 4 des Napfes ist im wesentlichen zur offenen Aussenkante 5 hin konisch erweitert und weist spiralförmig angeordnete Rippen 6 auf, wobei diese Rippen gemäss dem Prinzip der Archimedes-Schraube angeordnet und links gerichtet sind. Diese linksgerichtete, relativ starke Steigung der Rippen schaufelt bei Rechtsdrehung des Napfes die Paste und den Speichel fortlaufend gegen die Napfkante 5 zu, die den eigentlichen Wirkungsort der Paste darstellt. Der Pastenverlust durch Splattering, d. h. Zerspritzen, wird dadurch unterbunden und durch Schleimballen bedingte Arbeitsunterbrechungen fallen weg. Es ist verständlich, dass bei einem Linksantrieb des Napfes die Rippen rechts gerichtet wären, d. h. stets im Gegensinn zur Drehung des Napfes durch das Handstück. Gegen den Gewindestutzen hin wird die Aussenseite durch einen Kragen 7 abgeschlossen, dessen Umfang sich zum Gewindestutzen hin vergrössert.

Das Pastenaufnahmeteil 3 besteht aus einer Vertiefung, die vom Boden 8 ausgehend sich nach aussen erweitert, wobei die Innenseite 9, vom Boden aus aufsteigend, ebenfalls spiralförmige Rippen 10 aufweist, die, wie die Aussenrippen 6, links gerichtet sind und gemäss dem Prinzip der Archimedes-Schraube angeordnet sind.

Etwas unterhalb der offenen Innenkante 11 sind, etwa parallel zu dieser Innenkante 11, lippenartige Lamellen 12 angeordnet. Diese Lamellen, beispielsweise sechs an der Zahl, wirken wie ein Lippenventil und dichten den Napfinnenraum bzw. das Pastenreservoir gegen aussen ab. Dabei ist aber keine vollständige Abdichtung erwünscht, sondern es soll eine kontinuierliche Pastenabgabe gegen die Napfkante zu erfolgen. Dies wird dadurch erzielt, dass zwischen den Lamellen Unterbrüche 13 angeordnet sind, wobei es sechs Unterbrüche von 0,5 mm Breite sein können. Auf diese Weise wird die Pastenabgabe verstetigt und die Erschöpfung des Pastenvorrates im Napf stark verzögert. Der bisher bekannte und störende Pastenverlust im toten Winkel des Innenraumes wird beseitigt. Auch diese Innenstrukturen dienen in Doppelfunktion, d. h. zur stetigen Pastenabgabe und zur Wärmeableitung. Bei den Aussenspiralen kommt noch die Zuführung von Kühlluft hinzu, die durch die schaufelartigen Spiralen erhöht wird.

## Patentansprüche

1. Napf als Pastenträger für die Dentalhygiene, der aus einem gummielastischen Material besteht und von einem Handstück in eine Richtung antreibbar ist und ein Pasten-Aufnahmeteil (3) aufweist, wobei die zur offenen Kante (11) hin sich erweiternde Innenseite (9) des Aufnahmeteils (3) und die zur offenen Kante (5) hin sich erweiternde Aussenseite (4) eine Struktur aufweisen, **dadurch gekennzeichnet, dass** sowohl die Innen- als auch die Aussenseite (11, 4) des Napfes (1) dem Drehsinn des Handstückes entgegengerichtete, spiralförmige Rippen (10, 6) aufweisen.

2. Napf nach Anspruch 1, **dadurch gekennzeichnet, dass** die spiralförmigen Rippen (10, 6) im Sinne einer Archimedes-Schraube angeordnet sind.

3. Napf nach Anspruch 1 oder 2, **dadurch gekennzeichnet, dass** unterhalb der offenen Innenkante (11) im wesentlichen parallel dazu angeordnete Lamellen (12) mit Unterbrüchen (13) angeordnet sind.

4. Napf nach einem der Ansprüche 1 bis 3, **dadurch gekennzeichnet, dass** er aus einem thermoplastischen Elastomer gefertigt ist.

## Claims

1. Cup for use as a paste carrier in dental hygiene, consisting of a rubber-elastic material and adapted to be driven in one direction by a handpiece, the cup comprising a paste container portion (3), and the inner side (9) of the container portion, which enlarges towards the open edge (11), as well as its outer side (4), which enlarges towards the open edge (5), being structured, **characterised in that** both the inner and the outer sides (11, 4) of the cup (1) are provided with spiraled ribs (10, 6) that are opposed to the rotational direction of the handpiece.

2. Cup according to claim 1, **characterised in that** the spiraled ribs (10, 6) are disposed in the manner of an Archimedean screw.

3. Cup according to claim 1 or 2, **characterised in that** lamellae (12) with interruptions (13) are disposed beneath and essentially parallelly to the open inner edge (11).

4. Cup according to any one of claims 1 to 3, **characterised in that** it is made from a thermoplastic elastomer.

## Revendications

1. Cupule porteuse de pâte pour l'hygiène dentaire, consistant en une matière gommeuse élastique et capable d'être entraînée dans une direction par une pièce à main, la cupule comportant une partie réceptrice (3) de pâte, et la face intérieure (9) de la partie réceptrice (3), qui s'élargit vers l'arête ouverte (11), ainsi que sa face extérieure (4), qui s'élargit vers l'arête ouverte (5), étant structurées, **caractérisée en ce que** la face intérieure et la face extérieure (11, 4) de la cupule (1) présentent chacune des nervures hélicoïdales opposées au sens de rotation de la pièce à main.

2. Cupule selon la revendication 1, **caractérisée en ce que** les nervures hélicoïdales (10, 6) sont disposées à la manière d'une vis d'Archimède.

3. Cupule selon la revendication 1 ou 2, **caractérisée en ce que** des lamelles (12) avec des interruptions (13) sont disposées sous l'arête intérieure ouverte (11) essentiellement parallèlement à cette dernière.

4. Cupule selon l'une des revendications 1 à 3, **caractérisée en ce qu'**elle est fabriquée en une matière élastomère thermoplastique.
